Europäisches Patentamt

European Patent Office

Office européen des brevets

(19)

(11) Publication number : **0 503 954 A1**

# (12) EUROPEAN PATENT APPLICATION

(21) Application number : **92302167.9**

(22) Date of filing : **13.03.92**

(51) Int. Cl.⁵ : **B62D 53/08**

(30) Priority : **13.03.91 US 668891**

(43) Date of publication of application :
**16.09.92 Bulletin 92/38**

(84) Designated Contracting States :
**DE FR GB IT SE**

(71) Applicant : **HOLLAND HITCH COMPANY**
**467 Ottawa Avenue**
**Holland, Michigan 49424 (US)**

(72) Inventor : **Buckley, John Thomas**
**1461 Seminole Drive**
**Holland, Michigan 49424 (US)**

(74) Representative : **Robinson, Anthony John**
**Metcalf et al**
**Kilburn & Strode 30 John Street**
**London, WC1N 2DD (GB)**

(54) **Slide plate fifth wheel.**

(57)    A slide type fifth wheel hitch assembly (10) wherein the slide brackets (26) mounting the hitch are supported by and on a pair of parallel, laterally spaced, fore-to-aft elongated base plates (32) having a transverse forward tie bar (60) having its ends welded to the tops of the base plates and extending to the rack bars (38) to form front stops, and having a transverse rear tie bar (62) having its ends welded to the bottoms of the base plates.

FIG. I

EP 0 503 954 A1

This invention relates to slider type fifth wheel hitches.

Slider hitches of the type described in US-A-2985463, issued May 23, 1961, have been successfully used for almost three decades. An improved slider hitch is described in US-A-4443025, issued April 17, 1984. The present applicants, Holland Hitch Company, have made and sold many of these hitches. Moreover, large competitors successfully sell a copy of the earlier version noted above. Manufacture of these prior slider hitches involves supplying a wide and fairly thick steel plate, cutting a hole in the middle of the plate, rolling the opposite edges up to form a pair of slide tracks, and inserting a slide bracket. The location of the fifth wheel is fixed by selecting appropriate engaging retractable teeth with cooperative teeth in a pair of spaced racks.

While these units operate effectively, there are some disadvantages that have been discovered.

Firstly, the steel plate mounting the structure is large and heavy, causing substantial shipping expense and requiring hoisting equipment for handling. Moreover, a substantial amount of steel is used at significant cost.

Secondly, when the slider unit is to be outboard mounted, i.e., on a pair of angle iron supports that are attached to the outside faces of the truck frame elements, another plate is placed beneath the structure, rendering it heavier and more expensive.

Thirdly, when the edges of the plate are rolled to create the flat slide tracks, the resulting tracks are not really flat since they include some radius. Thus, the slide brackets must be beveled to clear the radius, resulting in an extra machining operation and less bearing area between the brackets and plate.

Fourthly, the central portion of the steel plate which must be cut out is scrap unless another use can be found for it.

An object of this invention is to provide a sliding fifth wheel assembly having the advantages of the prior successful unit, but without some at least of the described disadvantages of those units.

According to the present invention, a sliding fifth wheel hitch assembly comprises a bifurcated fifth wheel hitch; a pair of slide brackets mounting the hitch; a pair of parallel, laterally spaced, fore-to-aft, elongated base plates; the slide brackets being slidably supported on and retained on the base plates for longitudinal fore and aft movement with respect thereto; a forward tie bar extending laterally between said base plates and secured at its ends to the base plates; a rear tie bar extending laterally between the base plates and secured at its ends to the base plates; a pair of elongated, toothed rack bars fixed on the respective base plates; extendable, rack engaging, toothed shoe members movably mounted at the fifth wheel hitch; and means for shifting said shoe members into and out of locking engagement with the rack bars. It is thus possible to construct an assembly which does not have the heavy, bulky steel plate characteristic of the prior units. Hence, shipping is easier and less costly. The assembly is considerably lighter in weight, which also makes handling easier.

The invention also provides a construction by which it is possible to have flat slide bearing surfaces in a sliding fifth wheel arrangement, not requiring chamfering of the slide brackets. Therefore, greater surface area can be provided for bearing surface, to accommodate heavier loads.

The invention also makes it possible to eliminate the prior necessity of having a second heavy plate beneath the tracks when mounting the assembly in outboard style of the truck tractor frame.

In a preferred construction, the sliding fifth wheel hitch assembly has the bifurcated fifth wheel hitch mounted on a pair of trunnions which in turn are mounted on slide brackets cooperative with a pair of parallel, laterally spaced, elongated base plates. The slide brackets are slidable on the base plates, retained in place by a pair of elongated curl plates. These base plates are tied at the forward end by a tie bar extending laterally between them and secured to the base plates. This tie bar has its end portions extending past the toothed rack bars to form forward stops. The base plates are tied at the rearward ends by a rearward tie bar extending laterally between them and secured to the base plates. The rear tie bar has a vertical offset. Rack bars are fixed on the respective base plates and cooperate with rack engaging shoe members movably mounted at the fifth wheel hitch.

The invention may be carried into practice in various ways but one fifth wheel hitch assembly constructed in accordance with the present invention will now be described by way of example with reference to the accompanying drawings, in which:

Fig. 1 is a top plan view of the fifth wheel hitch assembly;

Fig. 2 is a side elevational view of the assembly in Fig. 1;

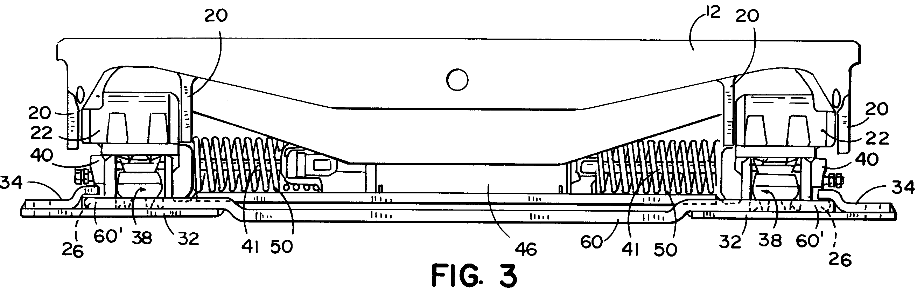

Fig. 3 is a front elevational view of the assembly in Fig. 1;

Fig. 4 is a top plan view of the mounting structure of the assembly in Fig. 1;

Fig. 5 is a side elevational view of the subassembly in Fig. 4;

Fig. 6 is a rear end elevational view of the subassembly in Fig. 4; and

Fig. 7 is a front end elevational view of the subassembly in Fig. 4, viewed toward the rear thereof.

Referring now specifically to the drawings, the complete fifth wheel hitch assembly 10 includes a bifurcated fifth wheel hitch member 12 having a pair of rear, spaced, sloping ramps 14 defining a receiving slot therebetween leading to a coupling 16 composed of jaws which close upon an entering kingpin in conventional manner. A typical safety mechanism such as pivotal lever 18 is in the mouth of the coupling area, to prevent the jaws from improperly closing on a kingpin at a vertical elevation other than a proper one. Fifth wheel hitch 12 includes a pair of downwardly depending outer flanges 20 on each of the opposite sides thereof, which receive a pair of conventional trunnions 22 connected to the hitch by a pair of pivot pins 24. This allows the fifth wheel hitch to pivot vertically on a transverse horizontal axis. Trunnions 22 are affixed to underlying slide brackets 26. These slide brackets are elongated in the fore to aft direction of the assembly.

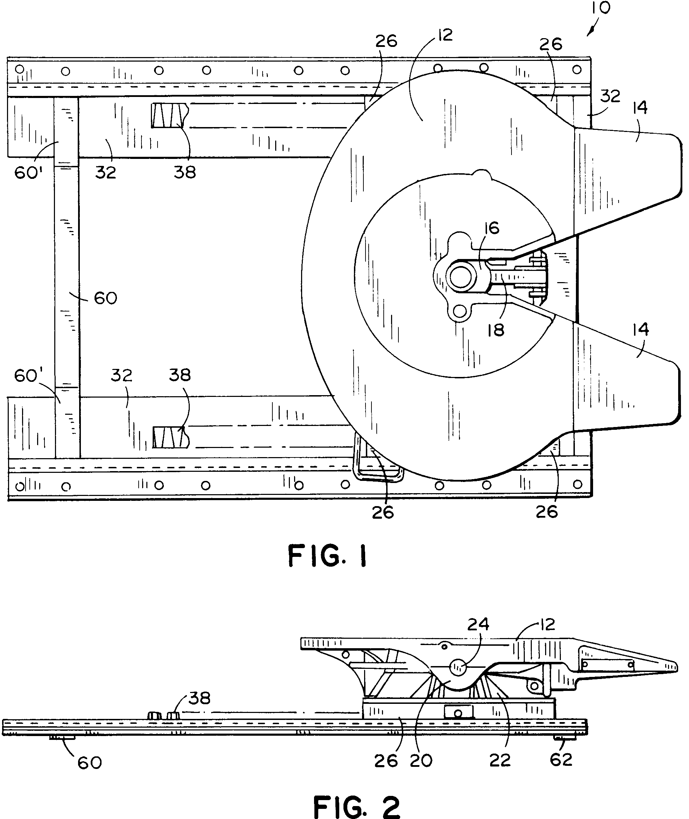

Slide brackets 26 are supported on a pair of fore to aft extending, laterally spaced mounting plates or base plates 32. The slide plates are retained on these elongated base plates by a pair of respective, elongated, curl plates 34, each of which has an elongated flange affixed to the outer portion of the base plate, and an upwardly inwardly curving portion to extend over the top of the slide plate. Affixed to each base plate is a rack bar 38, each rack bar having a plurality of spaced tapered teeth and grooves therebetween. (A portion of the teeth is depicted by phantom lines in Fig. 1.) The grooves have the wider portion inwardly toward the opposite rack bar. Mounted beneath the hitch is a pair of outwardly facing, rack bar engaging shoes 40 which have teeth of complementary configuration to those on the rack bars. These shoes are mounted on retractable rods 41 extending from the opposite ends of a central fluid cylinder 46 beneath the centre of the hitch. This cylinder is normally a one way acting, i.e., extending, device, biased to the contracted condition by a pair of compression coil springs 50 between the shoe members and the cylinder components, to normally bias the shoes into toothed engagement with the gear racks. Actuation of the cylinder temporarily extends the shoes to disengage the shoe teeth from the rack teeth, and thereby enable fore to aft movement of the fifth wheel hitch.

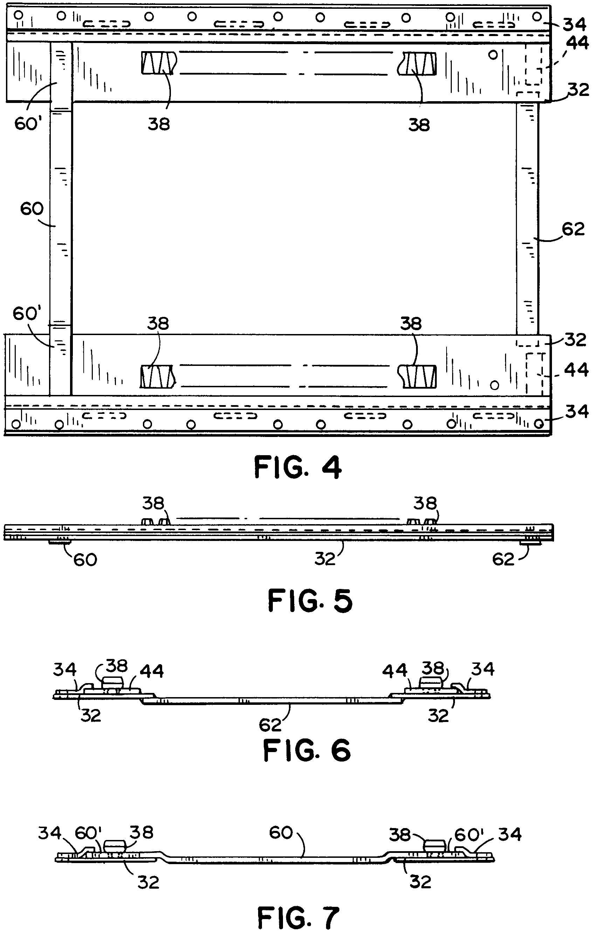

A laterally elongated front tie bar 60 is fixedly secured at its opposite ends, as by welding, to the top surfaces of the forward end portions of mounting plates 32 (Fig. 1) to secure and hold these two mounting plates in fixed lateral alignment at the forward ends. Its end portions 60' (Fig. 4) extend beyond the rack bars 38, serving as stops for the slidable hitch. Front tie bar 60 has a vertically downward offset between plates 32, thereby enabling the forward portion of the slider subassembly to move to the forward ends of the base plates without interference with this tie bar. A second, shorter, rear tie bar 62 has its ends fixedly secured as by welding to the undersurfaces of the rear end portions of mounting plates 32 (Fig. 4), to hold the rear ends of the mounting plates fixed. Suitable rear stops 44 (Fig. 6) on base plates 32 limit rearward sliding movement of the hitch.

The resulting assembly provides a slider hitch of only a fraction of the weight of prior sliders, and using considerably less material. If desired, the assembly can be shipped without the tie bars connected, i.e., "knock down" form, and assembled at distribution locations, by aligning the base plates at the necessary spacing, as in a jig, and welding the tie bars in place.

Conceivably, the construction described could be modified in various ways to appear other than the preferred embodiment depicted as illustrative, while still remaining within the scope of the invention.

## Claims

1. A sliding fifth wheel hitch assembly (10) comprising: a bifurcated fifth wheel hitch (12); a pair of slide brackets (26) mounting the hitch; a pair of parallel, laterally spaced, fore-to-aft, elongated base plates (32); the slide brackets being slidably supported on and retained on the base plates for longitudinal fore and aft movement with respect thereto; a forward tie bar (60) extending laterally between said base plates and secured at its ends to the base plates; a rear tie bar (62) extending laterally between the base plates and secured at its ends to the base plates; a pair of elongated, toothed rack bars fixed on the respective base plates; extendable, rack engaging, toothed shoe members (40) movably mounted at the fifth wheel hitch (12); and means (46) for shifting the shoe members into and out of locking engagement with the rack bars.

2. A sliding fifth wheel hitch assembly (10) according to claim 1 in which the hitch (12) is mounted by a pair of trunnions (22) and a pair of slide brackets (26) mounting the trunnions.

3. A sliding fifth wheel hitch assembly according to claim 1 or claim 2 which includes a pair of elongated curl plates (34) attached to the base plates and extending upwardly over a portion of the slide brackets to restrain the slide plates relative to lateral outward movement and upward movement, and thereby retain the slide brackets on the base plates.

4. A sliding fifth wheel hitch assembly according to any of claims 1 to 3 in which the rack bars (38) are toothed and the shoe members (40) engage between the teeth of the racks.

5. A sliding fifth wheel hitch assembly according to any of claims 1 to 4 wherein the forward tie bar (60) is attached to the top surfaces of the base plates (32), and extends across the rack bars (38) to form stops for the hitch.

6. A sliding fifth wheel hitch assembly according to any of claims 1 to 5 wherein the forward tie bar (60) is welded to the top surface of the base plates (32), is vertically downwardly offset between the base plates, and extends across the rack bars (38) to serve as forward stops for the hitch.

7. A sliding fifth wheel hitch assembly according to any of claims 1 to 6 wherein both said forward tie bar (60) and said rear tie bar (62) have ends welded to the base plates (32).

FIG. I

FIG. 2

FIG. 3

**FIG. 4**

**FIG. 5**

**FIG. 6**

**FIG. 7**

## EUROPEAN SEARCH REPORT

**European Patent Office**

Application Number

EP 92 30 2167

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 606 384 (FONTAINE ET AL.)<br>* column 1, line 64 - column 3, line 3; figures 2-6 * | 1-4,7 | B62D53/08 |
| Y,D | US-A-2 985 463 (GEERDS)<br>* column 3, line 24 - line 55; figures 3,4 * | 1-4,7 | |
| A,D | US-A-4 443 025 (MARTIN ET AL.)<br>* figures 2,5,10 * | 1-3 | |
| A | US-A-3 584 899 (GOTTLER ET AL.)<br>* abstract * | 1 | |
| | | | TECHNICAL FIELDS SEARCHED (Int. Cl.5)<br><br>B62D |

The present search report has been drawn up for all claims

| Place of search | Date of completion of the search | Examiner |
|---|---|---|
| BERLIN | 16 JUNE 1992 | BROYDE M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)